# EUROPÄISCHE PATENTSCHRIFT

(11) **EP 1 064 223 B1**
(45) Veröffentlichungstag und Bekanntmachung des Hinweises auf die Patenterteilung: **26.06.2002**
(21) Anmeldenummer: 99910350.0
(22) Anmeldetag: 17.03.1999
(51) Int. Cl.: C01B 17/90, C09C 1/24, C01G 23/053, C22B 34/12

(54) **VERFAHREN ZUR AUFARBEITUNG VON DÜNNSÄURE AUS DER TiO2-HERSTELLUNG**
METHOD FOR REPROCESSING WASTE ACID RESULTING FROM TiO2 PRODUCTION
PROCEDE DE TRAITEMENT D'ACIDE DILUE RESULTANT DE LA PREPARATION DE TiO2

(30) Priorität: 20.03.1998 DE 19812261
(43) Veröffentlichungstag der Anmeldung: 03.01.2001
(73) Patentinhaber: BAYER AG, 51368 Leverkusen (DE)
(72) Erfinder: AUER, Gerhard, D-47800 Krefeld (DE); LAILACH, Günter, D-47799 Krefeld (DE); MEISEN, Ulrich, D-47829 Krefeld (DE); SCHUY, Werner, D-47918 Tönisvorst (DE)
(86) Internationale Anmeldenummer: EP9901735
(87) Internationale Veröffentlichungsnummer: WO9948808

(56) Entgegenhaltungen:
- EP-A- 0 638 515
- DATABASE WPI Section Ch, Derwent Publications Ltd., London, GB; Class E31, AN 71-25991S XP002107325 & SU 258 289 A (URAL FORESTRY TECHNOLOGIC)

## Beschreibung

Die Erfindung betrifft ein Verfahren zur Herstellung von hochwertigem Gips sowie von Eisenoxid-Pigmenten aus Dünnsäure, die bei der Herstellung von Titandioxid nach dem Sulfatverfahren anfällt.

Die Verwertung oder zumindest schadlose Beseitigung der Dünnsäure ist in Europa und an den meisten anderen Produktionsstandorten für Titandioxid vorgeschrieben, so daß im Laufe der Zeit unterschiedliche Verfahren zur Verwertung entwickelt wurden:
In der Druckschrift EP-A 577 272 wird beschrieben, daß aus der Dünnsäure durch teilweise Neutralisation mit Calciumcarbonat ein verwertbarer Gips erhalten werden kann. Die nach Abtrennung dieses auch als "weißer Gips" bezeichneten Materials verbleibende Metallsulfat-Lösung wird danach durch Zugabe von CaO oder CaCO₃ auf einen pH-Wert von ca. 9 gebracht, wobei das hierbei erhaltene auch als "roter Gips" bezeichnete Material deponiert werden muß. Dabei werden einerseits wertvolle Rohstoffe einem Recycling entzogen und andererseits wertvoller Deponieraum in großem Umfang verbraucht, da je nach Titanrohstoff 1 bis 2,5 t dieses Abfalls pro Tonne erzeugten TiO₂-Pigments anfallen.

Ein anderes in EP-A 0 133 505 beschriebenes Verfahren zur Aufarbeitung der Dünnsäure vermeidet diese Nachteile, indem praktisch die gesamte anfallende Dünnsäure wieder zur Herstellung von TiO₂ verwendet wird, wobei die Dünnsäure zunächst aufkonzentriert und nach Abtrennung der dabei ausfallenden Filtersalze die 65 bis 85 %ige Schwefelsäure wieder zum Erzaufschluß eingesetzt wird. Aus den Filtersalzen wird durch thermische Spaltung SO₂ und aus diesem reine Schwefelsäure oder Oleum gewonnen, welche ebenfalls wieder zum Erzaufschluß verwendet werden. Dieses Verfahren minimiert zwar den Rohstoffverbrauch, ist jedoch sehr energieund damit kostenaufwendig.

Ein weiteres Verfahren zur Aufarbeitung der Dünnsäure, das in der Druckschrift US-A 3 016 286 beschrieben ist, beinhaltet die Neutralisation der Dünnsäure und die Ausfällung und Abtrennung der Hydroxide von Ti, Al, Cr, und V sowie die anschließende Ausfällung von Magnetit mit Ammoniak. Die Nachteile dieses Verfahrens bestehen jedoch darin, daß zum einen große Mengen an Ammoniak zur Neutralisation der freien Schwefelsäure verbraucht werden und daß der aus der stark Ammoniumsulfat-haltigen Lösung gefällte Magnetit keine Pigmenteigenschaften aufweist.

Bei einer in der Druckschrift EP-A 638 515 beschriebenen Modifizierung des Verfahrens in Form einer Extraktion des Magnesiums aus der Ammoniumsulfat-haltigen Lösung kann anschließend durch Kristallisation reines Ammoniumsulfat gewonnen und als Düngemittel verwendet werden. Dadurch wird zwar der Anteil an verwertetem Material erhöht, die Wirtschaftlichkeit des Verfahrens ist aufgrund der zusätzlichen Verfahrenschritte und der minderen Qualität des aus der stark Ammoniumsulfat-haltigen Lösung erhaltenen Magnetits jedoch nicht befriedigend.

Eine andere Variante zur Aufarbeitung der Dünnsäure besteht gemäß US-A 4 137 292 und DE-A 24 56 320 darin, daß durch Neutralisation der Dünnsäure mit Calciumverbindungen gleichzeitig Gips und Magnetit ausgefällt werden, wobei für eine Verwertung der beiden Verbindungen eine mechanische Abtrennung beispielsweise mittels eines Hydrozyklons oder durch Magnetabscheidung, vorgenommen werden muß, die trotz aufwendiger Verfahrensschritte weder zu reinem Gips noch zu einem reinen Magnetit-Pigment führt. Eine Optimierung des Verfahrens laut GB-A 1 421 773 dahingehend, daß bei der Fällung des Gipses mit Calciumverbindungen gleichzeitig Ammonium- oder Alkalimetallsalze anwesend sind, vermeidet ebenfalls nicht die erwähnten prinzipiellen Nachteile dieses Verfahrens.

Aufgabe war es daher, ein Verfahren zu entwickeln, das es ermöglicht, die anfallende Dünnsäure unter Herstellung qualitativ hochwertiger Produkte möglichst weitgehend einer sinnvollen Verwertung zuzuführen.

Überraschenderweise wurde gefunden, daß sich aus der bei der Herstellung von Titandioxid nach dem Sulfatverfahren anfallenden Dünnsäure sowohl ein hochwertiger Gips als auch hochwertige Eisenoxid-Pigmente dadurch herstellen lassen, wenn in einem ersten Schritt die Dünnsäure mit einer Calciumverbindung zu Gips umgesetzt und dieser, gegebenenfalls direkt, von der verbleibenden Lösung abgetrennt wird. In einem zweiten Schritt werden aus der so erhaltenen Lösung durch Erhöhung des pH-Wertes die Elemente Al, Ti, Cr, V und Fe(III) zumindest teilweise ausgefällt und abgetrennt. In einem dritten Schritt wird aus der verbleibenden Eisen(II)sulfat-haltigen Lösung ein Eisenoxid-Pigment gebildet und anschließend von der restlichen Lösung abgetrennt.

Gegenstand der Erfindung ist ein Verfahren zur Herstellung von Gips sowie eines Eisenoxid-Pigments aus der bei der Herstellung von Titandioxid nach dem Sulfatverfahren anfallenden Dünnsäure, dadurch gekennzeichnet, daß in einer ersten Stufe eine teilweise Neutralisation der Dünnsäure mit einer Calcium-Verbindung unter Ausfällung und gegebenenfalls direkter Abtrennung von Gips erfolgt, anschließend die verbleibende Lösung in einer zweiten Stufe weiter neutralisiert wird unter Ausfällung eines Ti-, Al-, Cr-, V- und gegebenenfalls Fe(III)-haltigen Niederschlags und die nach Abtrennung des Feststoffs erhaltene Eisensulfat-haltige Lösung in einer dritten Stufe unter Zusatz alkalischer Verbindungen sowie durch Zugabe eines Oxidationsmittels zu einem Eisenoxid-Pigment umgesetzt wird.

Die Abtrennung des in der ersten Stufe erhaltenen Gipses kann entweder direkt nach der Fällung erfolgen, wodurch eine besonders hochwertige Qualität erhalten wird; die Abtrennung des Gipses kann aber auch zusammen mit dem in der zweiten Stufe gefällten Ti-, Al-, Cr-, V- und gegebenenfalls Fe(III)-haltigen Feststoff erfolgen, wodurch das Verfahren vereinfacht wird. Bevorzugt wird die direkte Abtrennung des in der ersten Stufe erhaltenen Gipses.

Die teilweise Neutralisation der freien Schwefelsäure in der ersten Stufe erfolgt vorzugsweise durch Zugabe von Calciumcarbonat, Calciumhydrogencarbonat, Calciumoxid oder Calciumhydroxid oder aber anderer alkalisch reagierender Substanzen, die eine oder mehrere der angeführten Verbindungen enthalten, beispielsweise Dolomit. Die teilweise Neutralisation der freien Schwefelsäure in der ersten Stufe kann aber auch durch eine Kombination einzelner oben angeführter Substanzen erfolgen. Bevorzugt wird als Calcium-Quelle Calciumcarbonat, Calciumoxid oder Calciumhydroxid verwendet. Besonders bevorzugt wird feingemahlener Kalk (Calciumcarbonat) eingesetzt, da das hierbei entstehende CO₂ ebenfalls verwertet werden kann.

Es ist weiterhin möglich, gleichzeitig mit der Neutralisation der Dünnsäure den Eisen-Gehalt zur Steigerung der Menge an Eisenoxid-Pigment zu erhöhen, indem die Neutralisation der freien Schwefelsäure zu einem Teil mit Substanzen vorgenommen wird, die metallisches Eisen oder Eisen(II) enthalten, beispielsweise mit Eisenschrott, Walzzunder, Drehspänen oder Gußeisenspänen. Die weitere Neutralisation der freien Schwefelsäure kann dann mit Calciumcarbonat erfolgen.

Es ist oft zweckmäßig, die Dünnsäure vor der Umsetzung mit der Calciumverbindung zu verdünnen, um die Viskosität der Reaktionsmischung zu verringern. Zur Verdünnung kann entweder frisches Wasser oder aber ein Prozeßwasser, das im weiteren Verlauf des Verfahrens anfällt, verwendet werden. Bevorzugt erfolgt die Verdünnung im Verhältnis 1:1 (Gewichtsanteile Dünnsäure zu Gewichtsanteile Wasser). Es ist dabei vorteilhaft, die zur Neutralisation verwendete Ca-Verbindung mit einem Teil des Verdünnungswassers anzumaischen und mit dieser Suspension die Dünnsäure zu neutralisieren.

Die teilweise Neutralisation der Dünnsäure in der ersten Stufe durch Zugabe der Calciumverbindung erfolgt bevorzugt bis zu einem pH-Wert von 1,0 bis 3,0. Bei höheren pH-Werten kann durch Mitfällung von gefärbten Verunreinigungen, beispielsweise Fe(III)- oder andere Nebengruppenverbindungen, der Weißgrad des Gipses beeinträchtigt werden. Besonders bevorzugt wird bis zu einem pH-Wert von 1,4 bis 2,0 neutralisiert, da der so gefällte Gips besonders wenig gefärbte Verunreinigungen und besonders wenig TiO₂ enthält, so daß er auch die Anforderungen für spezielle Anwendungen, beispielsweise für Gipsestrich, erfüllt. Das so erhaltene reine Calciumsulfat wird von der Flüssigphase abgetrennt und vorzugsweise zur Entfernung von gefärbten Lösungsbestandteilen gewaschen.

Alternativ kann für die teilweise Neutralisation der freien Schwefelsäure in der ersten Stufe anstelle der Calciumverbindung auch eine entsprechende Bariumverbindung gewählt werden, wenn als Produkt Bariumsulfat gewünscht wird.

Anschließend wird die Lösung in der zweiten Stufe weiter neutralisiert, bevorzugt bis zu einem pH-Wert von 3,0 bis 5,0, besonders bevorzugt bis zu einem pH-Wert von 3,5 bis 4,8. Dabei werden insbesondere bei der nachfolgenden Magnetitfällung störende Titan-Verbindungen sowie teilweise Al-, Cr-, V- und Fe(III)-Verbindungen ausgefällt. Der so erhaltene Niederschlag wird von der Flüssigphase abgetrennt und kann entweder deponiert oder als Rohstoff für die Gewinnung von Ti, Al, Cr oder V verwendet werden.

Vorzugsweise wird vor der Ausfällung des Ti-, Al-, Cr- und V-haltigen Niederschlags gegebenenfalls vorhandenes Fe(III) durch Zugabe eines Reduktionsmittels, insbesondere von metallischem Eisen zu Fe(II) reduziert. Als Quelle des metallischen Eisens kommen insbesondere industriell anfallende Stoffe wie Drehspäne, Gußeisenspäne, Stanzblechabfälle oder auch Walzzunder in Frage. Diese Stoffe stehen in großen Mengen kostengünstig zur Verfügung. Dadurch wird die Menge des zu entsorgenden oder weiter zu verwertenden Niederschlags der zweiten Fällungsstufe reduziert und die Ausbeute an hochwertigem Eisenoxid-Pigment in der nachfolgenden Stufe erhöht. Diese Fe(III)-Reduktion kann entweder vor der Gipsfällung in der ersten Stufe oder aber danach, d.h. unmittelbar vor der Ausfällung der 3- und 4-wertigen Metallionen erfolgen. Bei der Reduktion des Fe(III) ist die Reaktion jedoch so zu steuern, daß möglichst wenig Ti³⁺ entsteht, das in der zweiten Stufe nur unvollständig ausgefällt würde. Gegebenenfalls kann auch durch Zugabe von Keimen aus Titanoxidhydrat die Fällung des Titans in der zweiten Stufe verbessert werden.

Für diese zweite Neutralisation kann als Neutralisationsmittel entweder eine Verbindung verwendet werden, die keine schwerlöslichen Sulfate bildet, so daß der Anfall an Feststoff minimiert wird. Es kann als Neutralisationsmittel aber auch eine Verbindung verwendet werden, die gut filtrierbare, schwerlösliche Sulfate bildet, und damit die Filtrierbarkeit des gesamten anfallenden Feststoffs deutlich verbessert. Schließlich kann aber auch eine Kombination von Neutralisationsmitteln, von denen eines lösliche Sulfate, ein anderes schwerlösliche Sulfate bildet, zur gezielten Optimierung dieses Verfahrensschritts Verwendung finden.

Als Neutralisationsmittel eignen sich Verbindungen aus der Gruppe gasförmiges NH₃, in Wasser gelöstes NH₃, Oxide, Hydroxide, Carbonate und Hydrogencarbonate der Alkali- oder Erdalkalimetalle, sowie alkalisch reagierende Gemische, die mindestens eine der angeführten Verbindungen enthalten. Aus wirtschaftlichen Gründen besonders vorteilhaft ist die Verwendung von alkalisch reagierenden Aschen, beispielsweise aus der Kohle- oder Müllverbrennung, als Neutralisationsmittel. Besonders bevorzugt ist die gleichzeitige Verwendung von Ammoniak und alkalisch reagierender Asche, oder die gleichzeitige Verwendung von Natronlauge und Asche als Neutralisationsmittel. Dabei wird bevorzugt überwiegend Ammoniak oder Natronlauge und nur zu einem geringen Anteil Asche verwendet, insbesondere >90 % Alkaliäquivalente Ammoniak oder Natronlauge und <10 % Alkaliäquivalente Asche. Bei dieser Verfahrensweise bewirkt der geringe Anteil an Asche eine deutliche Verbesserung der Filtrierbarkeit der Metallhydroxide, während die Menge an anfallendem Feststoff nicht wesentlich erhöht wird. Anstelle der Asche kann auch eine alkalische Calciumverbindung, beispielsweise CaO, verwendet werden, jedoch ist in der Regel die Verwendung der Asche wirtschaftlich attraktiver.

Die nach der zweiten Neutralisationsstufe und Abtrennung der Feststoffe erhaltene Eisensulfat-haltige Lösung wird für die Fällung des Eisenoxid-Pigments bevorzugt auf eine Konzentration von 150 bis 250 g, besonders bevorzugt auf 180 bis 190 g FeSO₄ pro Liter eingestellt. Gegebenenfalls kann diese Konzentration durch Eindampfen erreicht werden. Die eingestellte Eisensulfat-haltige Lösung wird unter Zusatz alkalischer Verbindungen und Zugabe eines Oxidationsmittels vorzugsweise durch Einblasen von Sauerstoff oder Sauerstoff-haltigen Gasen, insbesondere Luft, in bekannter Weise zu einem Eisenoxid-Pigment, vorzugsweise einem Magnetit-Pigment umgesetzt (Ullmann's Encyclopedia of Industrial Chemistry, 5th ed., Vol. A 20, p. 297 ff). Als alkalisch reagierende Verbindungen werden dabei vorzugsweise solche verwendet, die keine schwerlöslichen Sulfate bilden, wie beispielsweise NH₃, NaOH, KOH, Na₂CO₃, K₂CO₃, MgO, MgCO₃ oder Mg(OH)₂.

Für die erfindungsgemäße bevorzugte Herstellung eines Eisenoxidschwarz-Pigments wird zu der Eisensulfat-haltigen Lösung vorzugsweise eine solche Menge eines alkalisch reagierenden Fällungsmittel gegeben, daß das Verhältnis von Eisen(II)ionen zu Fällungsmittel 0,4 bis 0,65, insbesondere 0,5 bis 0,58 Äquivalente, beträgt. Wird beispielsweise als Fällungsmittel NaOH eingesetzt, so können auf 100 mol NaOH zwischen 40 und 65 mol FeSO₄ eingesetzt werden. Bei Verwendung von K₂CO₃ als Fällungsmittel werden auf 100 mol K₂CO₃ zwischen 80 und 130 mol FeSO₄ eingesetzt. Zu der Eisensulfat-haltigen Lösung wird die berechnete Menge der alkalischen Komponente vorzugsweise bei einer Temperatur zwischen 60 und 95°C, insbesondere zwischen 75 und 95°C, zugesetzt. Es ist auch möglich, die alkalische Komponente vorzulegen.

Anschließend wird mit einem Oxidationsmittel oxidiert. Als Oxidationsmittel können beispielsweise Verbindungen aus der Gruppe Sauerstoff, Ozon, H₂O₂, Natriumhypochlorit, Chlorlauge, Chlorate, Perchlorate, Nitrate und Chlor verwendet werden. Vorzugsweise wird Sauerstoff oder ein Sauerstoff-haltiges Gasgemisch, insbesondere Luft, in die Reaktionmischung eingeleitet. Die Oxidation wird beendet, sobald der Fe(II)-Gehalt der Suspension kleiner als 1 mol-% ist.

Die Aufarbeitung der Pigment-Suspensionen erfolgt durch die bekannten Schritte Filtration, Trocknung und Mahlung. Der Fachmann wird durch geeignete Variation der Herstellungsbedingungen in der Lage sein, eine breite Palette von Eisenoxid-Pigmenten verschiedener Teilchengröße und somit verschiedener Farbtöne und Stabilität herzustellen.

Durch Glühen des erhaltenen Eisenoxidschwarz-Pigments ist es möglich, hochwertige Eisenoxidbraun-Pigmente herzustellen. Der Farbton der Eisenoxid-braun-Pigmente kann dabei in gewissen Grenzen durch Variation der Glühbedingungen festgelegt werden.

Auf diese Weise wird aus der Dünnsäure sowohl ein hochwertiger Gips als auch ein hochwertiges Eisenoxid-Pigment in jeweils reiner Form erhalten und der anfallende Abfall minimiert.

Besonders vorteilhaft bei dem dreistufigen Verfahren mit der separaten Abtrennung des Gipses aus der ersten Stufe ist, daß der erfindungsgemäß erhaltene Gips besonders wenig färbende Verunreinigungen enthält, wie sie beispielsweise Verbindungen der Elemente Fe, Cr, V darstellen. Darüber hinaus enthält der Gips besonders wenig Ti-Verbindungen, was ihn auch zur Herstellung hochwertiger Gips-Estriche oder zur Herstellung von Anhydrit geeignet macht. Das erfindungsgemäß erhaltene Eisenoxid-Pigment ist nicht durch Gips verunreinigt und weist besonders gute pigmentoptische Eigenschaften auf, da die hierfür verwendete Eisensulfät-haltige Ausgangslösung zum einen besonders wenig Titansalze enthält und zum anderen aufgrund der Gipsfällung in der ersten Stufe keine sehr hohe Konzentration an Neutralsalzen, beispielsweise Na₂SO₄, K₂SO₄ oder (NH₄)₂SO₄, aufweist. Darüber hinaus ist das erfindungsgemäß hergestellte Eisenoxid-Pigment aufgrund der Vorfällung der Metallhydroxide in der zweiten Stufe arm an Schwermetall-Verbindungen, insbesondere des Cr und V. Durch das erfindungsgemäße Verfahren ist es möglich, die als Abfall anfallende Dünnsäure mit einfachen verfahrenstechnischen Operationen und mit vergleichsweise niedrigem Energiebedarf zu hochwertigen Produkten in Form von reinem Gips, Eisenoxid mit Pigmenteigenschaften und reinem CO₂ zu verarbeiten und den Abfall zu minimieren. Vorzugsweise wird die Abfallmenge von 7 bis 8 t Dünnsäure pro t TiO₂ auf lediglich 0,2 bis 0,7 t Filterkuchen (aus der zweiten Stufe) pro t erzeugten TiO₂ reduziert.

Wenn die Abtrennung des in der ersten Stufe ausgefällten Gipses gemeinsam mit den in der zweiten Stufe ausgefällten Metallhydroxiden und dem in der zweiten Stufe zusätzlich ausgefällten Gips erfolgt, fallen keinerlei Rückstände mehr an, welche zu deponieren oder aufzuarbeiten sind (siehe Beispiel 6).

Die erfindungsgemäß erhaltenen Eisenoxid-Pigmente können zur Einfärbung von Farben, Lacken, Kunststoffen, Baustoffen, Papier sowie anderen Materialien verwendet werden. Der erfindungsgemäß erhaltene Magnetit kann darüber hinaus auch als Magnet-Pigment für Toner Verwendung finden.

Die Bestimmung des Farbtons des erhaltenen Eisenoxid-Pigments erfolgt nach folgenden Vorschriften:

### Messung des Purtons von Eisenoxid-Pigmenten:

Das Pigment wird mit einem Muller (Teller-Farbenausreibmaschine) in einem iufttrocknenden Lacksystem dispergiert. Das Lacksystem (Lack) besteht aus folgenden Komponenten:
- 95,26 %: ®ALKYDAL F 48 (Bindemittel, Bayer AG, mittelöliges, lufttrocknendes Alkydharz auf Basis trocknender pflanzlicher Fettsäuren in Test-benzin/Xylol-Gemisch 38:7 mit einem nichtflüchtigen Anteil von ca. 55 %, Ölgehalt/Triglycerid im nichtflüchtigen Anteil ca. 48 %, Phthalsäureanhydrid im nichtflüchtigen Anteil ca. 26 %)
- 0,78 %: 2-Butanonoxim, 55 %ig in Testbenzin (Hautverhinderungsmittel)
- 1,30 %: ®Octa Soligen Calcium (Netzmittel, Calciumsalz verzweigter C₆-C₁₉-Fettsäuren im Kohlenwasserstoffgemisch (enthält 4 % Ca), Borchers AG)
- 0,22 %: ®Octa Soligen Kobalt 6 (Trockenstoff, Kobalt(2+)salz verzweigter C₆-C₁₉-Fettsäuren im Kohlenwasserstoffgemisch (enthält 6% Co), Borchers AG)
- 0,87 %: ®Octa Soligen Zirkonium 6 (Trockenstoff, Zirkoniumsalz verzweigter C₆-C₁₉-Fettsäuren im Kohlenwasserstoffgemisch (enthält 6% Zr), Borchers AG)
- 1,57 %: Glykolsäure-n-butylester (= Hydroxyessigsäurebutylester) (Verlaufsverbesserer)

Die Komponenten werden mit einem Schnellrührer zum fertigen Lack vermischt. Verwendet wird eine Teller-Farbenausreibmaschine (Muller), wie in DIN EN ISO 8780-5 (April 1995) beschrieben. Zur Anwendung kommt ein ®ENGELSMANN JEL 25/53 Muller mit einem wirksamen Tellerdurchmesser von 24 cm. Die Drehzahl des unteren Tellers beträgt ca. 75 min⁻¹. Durch Einhängen eines 2,5 kg Belastungsgewichtes auf den Belastungsbügel wird die Kraft zwischen den Tellern auf ca. 0,5 kN eingestellt. Es werden 0,8 g Pigment und 2,00 g Lack in einer Stufe zu 100 Umdrehungen mit 2,5 kg Belastungsgewicht nach dem in DIN EN ISO 8780-5 (April 1995) Abschnitt 8.1 beschriebenen Verfahren dispergiert. Der Muller wird geöffnet und der Lack zügig auf dem unteren Teller außerhalb des Mittelpunktes gesammelt. Anschließend werden weitere 2,00 g Lack zugesetzt und die Teller zusammengeklappt. Nach zwei Stufen zu 50 Umdrehungen ohne Belastungsgewicht ist die **Präparation beendet.**

Der pigmentierte Lack wird mit einem Filmzieher (Spalthöhe mindestens 150 µm, höchstens 250 µm) auf einem nicht saugfähigen Karton aufgestrichen. Der lackierte Karton (Aufstrich) wird dann mindestens 12 h bei Raumtemperatur getrocknet. Vor der Farbmessung wird der Aufstrich eine Stunde bei ca. 65 °C ( ± 5°C) getrocknet und abgekühlt.

### Messung der Aufhellung von Eisenoxid-Pigmenten:

Das Pigment und das Aufhellmittel werden mit einem Muller (Teller-Farbenausreibmaschine) in einem lufttrocknenden Lacksystem dispergiert. Als Aufhellmittel wird ein handelsübliches ®Bayertitan R-KB-2 Titandioxid-Pigment (Bayer AG) verwendet. Dieses Pigment entspricht dem Typ R 2 in ISO 591 - 1977. Das Lacksystem (Lack) entspricht demjenigen zur Bestimmung des Purtons (s. oben).

Die Komponenten des Lacksystems werden mit einem Schnellrührer zum fertigen Lack vermischt.

Die Herstellung des pigmentierten Lackes und die des Lackaufstriches erfolgen so, wie bei der Bestimmung des Purtons (s. oben) beschrieben, wobei 0,1500 g zu prüfendes Pigment, 0,7500 g Bayertitan R-KB-2 und 2,00 g Lack eingewogen werden.

### Messung des Purtons von Gips am Pulverpressling:

Zur Herstellung des Pulverpreßlings werden 10 g der Gipsprobe innerhalb von 30 Sekunden linear von 0 auf 120 bar in einer hydraulischen Presse kompaktiert und 6 Sekunden bei 120 bar gehalten. Die farbmetrische Charakterisierung des Pulverpreßlings erfolgt analog zur farbmetrischen Charakterisierung von Lackaufstrichen.

### Farbmeßgerät:

Es wird ein Spektrophotometer ("Farbmeßgerät") mit einer Ulbrichtkugel mit der Meßgeometrie d/8 ohne Glanzfalle verwendet. Diese Meßgeometrie ist in ISO 7724/2-1984 (E) Punkt 4.1.1, in DIN 5033 Teil 7 (Juli 1983) Punkt 3.2.4 und in DIN 53 236 (Januar 1983) Punkt 7.1.1 beschrieben. Zur Anwendung kommt ein ®Dataflash 2000 Meßgerät der Firma Datacolor International.

Das Farbmeßgerät wird gegen einen weißen, keramischen Arbeitsstandard kalibriert, wie in ISO 7724/2-1984 (E) Punkt 8.3 beschrieben. Die Reflexionsdaten des Arbeitsstandards gegen einen ideal mattweißen Körper sind im Farbmeßgerät hinterlegt, so daß nach Kalibrierung mit dem weißen Arbeitsstandard alle Farbmessungen auf den ideal mattweißen Körper bezogen werden. Die Schwarzpunktkalibrierung wird mit einem schwarzen Hohlkörper des Farbmeßgeräteherstellers ausgeführt.

### Farbmessung:

Eine möglicherweise vorhandene Glanzfalle ist ausgeschaltet. Die Temperatur von Farbmeßgerät und Prüfling beträgt ca. 25 °C ± 5 °C.

Der Lackaufstrich wird so an das Farbmeßgerät gelegt, daß die Meßöffnung eine mittlere Stelle der Lackschicht abdeckt. Der Aufstrich muß vollständig und plan anliegen. Die Meßöffnung muß vollständig von der Lackschicht bedeckt sein. Anschließend erfolgt die Messung.

### Berechnung der CIE-Koordinaten:

Aus dem gemessenen Reflexionsspektrum werden nach den Berechnungsanweisungen in ASTM E 308 - 1985, Punkt 7 die CIE-Koordinaten L*, a* und b* von 1976 berechnet. Zur Verwendung kommen die Gewichtungsfunktionen der Normlichtart C und des 2°-Normalbeobachters von 1931 in ASTM E 308 - 1985, Table 5.6. Der Wellenlängenbereich liegt zwischen 400 nm und 700 nm. Das Wellenlängenintervall beträgt 20 nm. Es wird rechnerisch kein Glanz abgezogen. Die erhaltenen Remissionswerte werden nach DIN 5033, Teil 3 (Juli 1992) in das CIELAB-Farbdatensystem umgerechnet.

Die relative Farbstärke wird in Analogie zum relativen Streuvermögen nach DIN 53 165 (Punkt 3.4) mit Bayertitan R-KB-2 als Aufhellmittel und einem geeigneten Bayferrox-Referenz-Pigment (anstelle des Farbrußes) errechnet; als ρ_{∞} wird der Normfarbwert Y/100 verwendet.

Nachfolgend wird die Erfindung beispielhaft beschrieben, ohne daß darin eine Einschränkung zu sehen ist. Die in den Beispielen angeführten Teile und Prozente beziehen sich auf das Gewicht, soweit nicht anders vermerkt.

### Beispiele

### Beispiel 1:

100 kg Dünnsäure mit einem Gehalt an freier Schwefelsäure von 24,45 % und einem Fe-Gehalt von 2,95 % werden mit 50 kg Wasser verdünnt und auf 80°C aufgeheizt. In diese Lösung wird innerhalb von 1,5 h unter Rühren eine Suspension bestehend aus 25,94 kg gemahlenem Calciumcarbonat (53,9 % CaO; 43,1 % CO₂) und 50 kg Wasser zugepumpt Nach beendeter Zugabe wird weitere 2 h gerührt. Der pH-Wert der Reaktionsmischung beträgt danach 1,5. Das entstehende CO₂ kann gesammelt, gegebenenfalls gereinigt und komprimiert werden. Der ausgefällte Gips wird über Nutschen abfiltriert und mit 74 kg einer 0,167 %igen Schwefelsäure (pH = 1,5) gewaschen. Es werden 88,83 kg Filtrat, 80,7 kg Waschfiltrat und 101,5 kg Filterkuchen mit 50,42 % Feststoffgehalt (60°C bis zur Gewichtskonstanz) erhalten. Nach Trocknung des Filterkuchens im Umlufttrockenschrank bei 60°C werden 51,18 kg Calciumsulfat-Dihydrat mit folgenden Eigenschaften erhalten:

| | |
|---|---|
| Restfeuchte | 0,03 % (24 h bei 40°C): |
| Ca | 20,0% |
| SO₄ | 54,9 % |
| CO₃ | 0,07 % |
| Fe | 1,25 % |
| Ti | 0,78 % |
| Mg | 0,3 % |
| Mn | 0,03 % |
| Cr | 0,021 % |
| V | 0,054 % |
| Al | 0,2 % |
| Na | 0,071 % |
| DIN pH | 2,76 |
| BET | 21,1 m²/g |
| | |
| Purton am Pulverpressling | L* = 87,5 |
| | ΔL* = -6,2 (gegen Email-Kachel BAM SIE 0259/05 b) |
| | ΔL* = -10,0 (gegen Bayertitan R-KB-2) |

Zu 67,4 kg des bei der Abtrennung des Gipses in der ersten Stufe erhaltenen Filtrats (35,3 kg Filtrat und 32,1 kg Waschfiltrat; pH-Wert 1,78) wird bei 75°C eine Suspension bestehend aus 0,464 kg CaO und 4,176 kg Wasser während 2 h zugepumpt. Der pH-Wert der Reaktionsmischung beträgt danach 4,5. Der ausgefällte Niederschlag wird über Nutschen abfiltriert und mit 1,5 kg Wasser gewaschen. Es werden 56,3 kg Filtrat, 2,08 kg Waschfiltrat und 3,66 kg Filterkuchen mit 48,3 % Feststoffgehalt (60°C bis zur Gewichtskonstanz) erhalten. Nach Trocknung des Filterkuchens im Umlufttrockenschrank bei 60°C werden 1,768 kg Feststoff mit folgenden Eigenschaften erhalten:

| | |
|---|---|
| Restfeuchte | 0,21 % (24 h bei 40°C): |
| Ca | 16,8 % |
| SO₄ | 45,0 % |
| CO₃ | 0,05 % |
| Fe | 1,8 % |
| Ti | 0,39 % |
| Mg | 0,13 % |
| Mn | 0,014 % |
| Cr | 0,34 % |
| V | 0,50 % |
| Al | 5,1 % |
| Na | 0,032 % |
| DIN pH | 4,41 |
| BET | 26,1 m²/g |
| | |
| Purton am Pulverpressling | L* = 79,4 |
| | ΔL* = -14,3(gegen Email-Kachel BAM SIE 0259/05 b) |
| | ΔL* = -18,1 (gegen Bayertitan R-KB-2) |

58,4 kg der nach Abtrennung des Filterkuchens in der zweiten Stufe erhaltenen Eisensulfat-haltigen Lösung (56,3 kg Filtrat und 2,08 kg Waschfiltrat; während der Zwischenlagerung mit Schwefelsäure auf pH <2 gestellt, um Oxidation zu verhindern; FeSO₄-Konzentration von 42 g/l) wird in einem Rührbehälter mit Rührer und Begasungseinrichtung vorgelegt und auf 85°C erwärmt. Danach werden 5,72 kg einer 24 %igen Natronlauge (300 g NaOH/l) zugegeben, um den pH-Wert der Reaktionsmischung auf 7,0 einzustellen. Anschließend wird mit 1 m³/h Luft begast, wobei der pH-Wert durch weitere Zugabe von NaOH konstant bei 7,0 gehalten wird, bis es zu einem Potentialsprung in der Lösung von ca. -700 mV auf ca. -200 mV kommt (nach ca. 4,5 h). Der ausgefällte Magnetit wird über Nutschen abfiltriert und mit 5,0 kg Wasser gewaschen. Es werden 50,35 kg Filtrat, 4,1 kg Waschfiltrat und 1,76 kg Filterkuchen mit 67,4 % Feststoffgehalt (60°C bis zur Gewichtskonstanz) erhalten. Nach Trocknung des Filterkuchens im Umlufttrockenschrank bei 60°C und Desagglomeration mit einer Schlagkreuzmühle werden 1,186 kg Magnetit mit folgenden Eigenschaften erhalten:

| | |
|---|---|
| Ca | 0,045 % |
| SO₄ | 1,24 % |
| Fe | 68,45 % |
| Ti | 0,011 % |
| Mg | 0,22 % |
| Mn | 1,0 % |
| Cr | 0,005 % |
| V | 0,004 % |
| Al | 0,043 % |
| Na | 0,11 % |
| BET | 7,5 m²/g |
| | |
| Purton | L* = 12,4 ΔL* = -0,4 (gegen Bayferrox 330) |
| | a* = 0,8 Δa* = -0,1 (gegen Bayferrox 330) |
| | b* = -0,2 Δb* = -0,9 (gegen Bayferrox 330) |
| Aufhellung | L* = 52,9 ΔL* = -3,1 (gegen Bayferrox 330) |
| | a* = 0,5 Δa* = -0,1 (gegen Bayferrox 330) |
| | b* = -4,2 Δb* = -1,0 (gegen Bayferrox 330) |

Die relative Farabstärke gegen Bayferrox 330 beträgt 131 %.
Der erhaltene Magnetit ist auch als Magnet-Pigment für Toner geeignet:
- Sättigung: = 1 027 Gauss·cm³/g
- Remanenz: = 133 Gauss·cm³/g
- Koerzitivkraft: = 61,9 Oerstedt

### Beispiel 2:

100 kg Dünnsäure mit einem Gehalt an freier Schwefelsäure von 24,45 % und einem Fe-Gehalt von 2,95 %) werden mit 50 kg Wasser verdünnt und auf 80°C aufgeheizt. In diese Lösung wird innerhalb von 1,5 h unter Rühren eine Suspension bestehend aus 25,94 kg gemahlenem Calciumcarbonat (53,9 % CaO; 43,1 % CO₂) und 50 kg Wasser zugepumpt. Nach beendeter Zugabe wird weitere 2 h gerührt. Der pH-Wert der Reaktionsmischung beträgt danach 1,5. Das entstehende CO₂ kann gesammelt, gegebenenfalls gereinigt und komprimiert werden. Der ausgefällte Gips wird über Nutschen abfiltriert und mit 74 kg einer 0,167 %igen Schwefelsäure (pH = 1,5) gewaschen. Es werden 88,83 kg Filtrat, 80,7 kg Waschfiltrat und 101,5 kg Filterkuchen mit 50,42 % Feststoffgehalt (60°C bis zur Gewichtskonstanz) erhalten. Nach Trocknung des Filterkuchens im Umlufttrockenschrank bei 60°C werden 51,18 kg Calciumsulfat-Dihydrat mit folgenden Eigenschaften erhalten:

| | |
|---|---|
| Restfeuchte | 0,03 % (24 h bei 40°C): |
| Ca | 20,0 % |
| SO₄ | 54,9 % |
| CO₃ | 0,07 % |
| Fe | 1,25 % |
| Ti | 0,78 % |
| Mg | 0,3 % |
| Mn | 0,03 % |
| Cr | 0,021 % |
| V | 0,054 % |
| Al | 0,2 % |
| Na | 0,071 % |
| | |
| DIN pH | 2,76 |
| BET | 21,1 m²/g |
| Purton am Pulverpressling | L* = 87,5 |
| | ΔL* = -6,2 (gegen Email-Kachel BAM SIE 0259/05 b) |
| | ΔL* = -10,0 (gegen Bayertitan R-KB-2) |

In 67,4 kg des bei der Abtrennung des Gipses in der ersten Stufe erhaltenen Filtrats (35,3 kg Filtrat und 32,1 kg Waschfiltrat; pH-Wert 1,78) wird bei 75°C 0,214 kg NH₃-Gas während 1 h eingeleitet. Der pH-Wert der Reaktionsmischung beträgt danach 4,5. Der ausgefällte Niederschlag wird über Nutschen abfiltriert und mit 1,5 kg Wasser gewaschen. Es werden 61,7 kg Filtrat, 1,9 kg Waschfiltrat und 2,038 kg Filterkuchen mit 30,9 % Feststoffgehalt (60°C bis zur Gewichtskonstanz) erhalten. Nach Trocknung des Filterkuchens im Umlufttrockenschrank bei 60°C werden 0,63 kg Feststoff mit folgenden Eigenschaften erhalten:

| | |
|---|---|
| Ca | 0,3 % |
| Fe | 3,5 % |
| Ti | 2,1 % |
| Mg | 0,34 % |
| Mn | 0,027 % |
| Cr | 1,5 % |
| V | 2,5 % |
| Al | 17,7 % |
| NH₄ | 0,41 % |
| | |
| BET | 45,3 m²/g |

63,6 kg der nach Abtrennung des Filterkuchens in der zweiten Stufe erhaltenen Eisensulfat-haltigen Lösung (61,7 kg Filtrat und 1,9 kg Waschfiltrat; während der Zwischenlagerung mit Schwefelsäure auf pH <2 gestellt, um Oxidation zu verhindern; FeSO₄-Konzentration von 45 g/l) wird in einem Rührbehälter mit Begasungseinrichtung vorgelegt und unter N₂-Beschleierung auf 85°C erwärmt. Danach werden während ca. 3,3 h 2,003 kg NH₃ eingeleitet, um den pH-Wert der Reaktionsmischung auf 7,0 einzustellen. Anschließend wird mit 1 m³/h Luft begast, wobei der pH-Wert durch weitere Zugabe von NH₃ konstant bei 7,0 gehalten wird, bis es zu einem Potentialsprung in der Lösung von ca. -700 mV auf ca. -200 mV kommt (nach ca. 5 h). Der ausgefällte Magnetit wird über Nutschen abfiltriert und mit 5,0 kg Wasser gewaschen. Es werden 52,06 kg Filtrat, 4,76 kg Waschfiltrat und 2,39 kg Filterkuchen mit 54,76 % Feststoffgehalt (60°C bis zur Gewichtskonstanz) erhalten. Nach Trocknung des Filterkuchens im Umlufttrockenschrank bei 60°C und Desagglomeration mit einer Schlagkreuzmühle werden 1,31 kg Magnetit mit folgenden Eigenschaften erhalten:

| | | |
|---|---|---|
| Ca | 0,020 % | |
| Fe | 64,6 % | |
| Ti | 0,011 % | |
| Mg | 1,0 % | |
| Mn | 0,79 % | |
| Cr | 0,034 % | |
| V | 0,10 % | |
| Al | 0,71 % | |
| NH₄ | <0,03% | |
| | | |
| BET | 12,8 m²/g | |
| | | |
| Purton | L* = 13,2 ΔL* = 0,4 | (gegen Bayferrox 330) |
| | a* = 0,9 Δa* = 0,0 | (gegen Bayferrox 330) |
| | b* = 0,8 Δb* = 0,1 | (gegen Bayferrox 330) |
| Aufhellung | L* = 56,5 ΔL* = 0,2 | (gegen Bayferrox 330) |
| | a* = 0,7 Δa* = 0,1 | (gegen Bayferrox 330) |
| | b* = -2,7 Δb* = 0,5 | (gegen Bayferrox 330) |

Die relative Farabstärke gegen Bayferrox 330 beträgt 98 %.
Der erhaltene Magnetit ist auch als Magnet-Pigment für Toner geeignet:
- Sättigung: = 1 061 Gauss cm³/g
- Remanenz: = 221 Gauss · cm³/g
- Koerzitivkraft: = 68,5 Oerstedt

### Beispiel 3:

20 g des gemäß Beispiel 1 erhaltenen Magnetits werden zu einem Eisenoxidbraun-Pigment verglüht, indem der in einer Keramikschale befindliche Magnetit in einem Kammerofen in einem Luftstrom von 600 l/h mit einer Aufheizrate von 4°C/min aufgeheizt und bei 600°C aus dem Ofen herausgenommen wird.

Nach einer Mahlung von 30 s im Dismembrator wird ein Eisenoxidbraun-Pigment mit folgenden Eigenschaften erhalten:

| | | |
|---|---|---|
| Purton | L* = 32,5 | |
| | a* = 16,2 | |
| | b* = 9,9 | |
| | ΔL* = 0,5 | (gegen Bayferrox 180 M) |
| | Δa* = -2,3 | (gegen Bayferrox 180 M) |
| | Δb* = 1,5 | (gegen Bayferrox 180 M) |
| | | |
| Aufhellung | L* = 59,2 | |
| | a* = 13,0 | |
| | b = 2,6 | |
| | ΔL* = -7,3 | (gegen Bayferrox 180 M) |
| | Δa* = 1,0 | (gegen Bayferrox 180 M) |
| | Δb* = 2,2 | (gegen Bayferrox 180 M) |

Die relative Farbstärke gegen Bayferrox 180 M beträgt 196%.

### Beispiel 4:

10 kg Dünnsäure (Zusammensetzung wie in Beispiel 1) werden mit 0,5 kg Wasser verdünnt und auf 80°C aufgeheizt. In diese Lösung werden innerhalb von 1,5 h unter Rühren eine Suspension, bestehend aus gemahlenem Calciumcarbonat und 0,5 kg Wasser, bis zu einem pH-Wert von 2,5, zugepumpt Nach beendeter Zugabe wird weitere 2 h gerührt. Das entstehende CO₂ kann gesammelt, gegebenenfalls gereinigt und komprimiert werden. Der ausgefällte Gips wird über Nutschen abfiltriert und mit verdünnter Schwefelsäure (pH = 2,5) gewaschen.

Nach Filtration und Trocknung des Filterkuchens im Umlufttrockenschrank bei 60°C wird ein Calciumsulfat-Dihydrat erhalten, das im Vergleich zu dem entsprechenden Produkt aus Beispiel 1 einen etwas höheren Titan-Gehalt, jedoch einem vergleichbaren Weißgrad aufweist.

Abgesehen von einer Verwendung als Gips-Estrich ist dieses Material für die meisten anderen Anwendungsgebiete gleichermaßen geeignet wie das entsprechende Produkt aus Beispiel 1.
Die weitere Aufarbeitung des Filtrats zu einem Eisenoxidschwarz-Pigment erfolgt analog zu Beispiel 1.

### Beispiel 5:

Ein analog zu Beispiel 1 ausgefällter und über Nutschen abfiltrierter Gips wird mit 102 kg (anstatt 74 kg wie in Beispiel 1) einer verdünnten Schwefelsäure (pH = 1,94) gewaschen. Nach Trocknung des Filterkuchens im Umlufttrockenschrank bei 60°C wird Calciumsulfat-Dihydrat mit folgenden Eigenschaften erhalten:

| | |
|---|---|
| Ca | 22,5 % |
| SO₄ | 55,4 % |
| CO₃ | 0,28 % |
| Fe | 0,10 % |
| Ti | 0,45 % |
| Mg | 0,018 % |
| Mn | 0,003 % |
| Cr | 0,019 % |
| V | 0,042 % |
| Al | 0,17 % |

Durch die intensivere Wäsche wird ein besonders reines Calciumsulfat-Dihydrat erhalten.

Die weitere Aufarbeitung des Filtrats zu einem Eisenoxidschwarz-Pigment erfolgt analog zu Beispiel 1.

### Beispiel 6:

40 kg Dünnsäure mit einem Gehalt an freier Schwefelsäure von 24,45% und einem Fe-Gehalt von 2,95%) werden mit 20 kg Wasser verdünnt und auf 80°C aufgeheizt. In diese Lösung werden innerhalb von 1,5 h unter Rühren eine Suspension, bestehend aus 10,3 kg gemahlenem Calciumcarbonat (53,9% CaO; 43,1% CO₂) und 20 kg Wasser, zugepumpt. Der pH-Wert der Reaktionsmischung beträgt danach 1,5. Das entstehende CO₂ kann gesammelt, gegebenenfalls gereinigt und komprimiert werden.

Anschließend wird eine Suspension, bestehend aus 0,464 kg CaO und 4,176 kg Wasser, während 2 h zugepumpt. Der pH-Wert der Reaktionsmischung beträgt danach 4,5. Der ausgefällte Niederschlag wird über Nutschen abfiltriert und mit ca. 75 kg Wasser gewaschen.

Nach Trocknung des Filterkuchens im Umlufttrockenschrank bei 60°C werden ca. 22 kg Feststoff mit folgenden Eigenschaften erhalten:

| | |
|---|---|
| Ca | 19,7 % |
| SO₄ | 54,1 % |
| Fe | 1,29 % |
| Ti | 0,75 % |
| Mg | 0,29 % |
| Mn | 0,020 % |
| Cr | 0,047 % |
| V | 0,098 % |
| Al | 0,59 % |
| Na | 0,068 % |
| Purton am Pulverpressling | L* = 87,3 |
| | ΔL* = -6,5 (gegen Email-Kachel BAM SIE 0259/05 b) |
| | ΔL* = -10,3 (gegen Bayertitan R-KB-2) |
| zum Vergleic | |
| Purton am Pulverpreßling von Gips aus Rauchgasentschwefelung (REA-Gips) | L* = 74,8 |

Der erhaltene überwiegend Gips-haltige Feststoff hat eine vergleichbare Zusammensetzung und nur einen geringfügig niedrigeren Weißgrad als der in der ersten Fällstufe von Beispiel 1 erhaltene Gips und ist für die meisten Anwendungszwecke in gleicher Weise geeignet. Ein Vergleich mit Gips aus einer Rauchgas-Entschwefelungsanlage zeigt, daß der Weißgrad des erfindungsgemäß erhaltenen Gipses deutlich über dem von REA-Gips liegt.
Die weitere Aufarbeitung des Filtrats zu einem Eisenoxidschwarz-Pigment erfolgt analog zu Beispiel 1.

### Beispiel 7:

Die Ausfällung und Abtrennung des Gipses in der ersten Stufe erfolgt analog zu Beispiel 1.

Anschließend werden 1,685 kg der nach Abtrennung des Gipses erhaltenen Lösung (Filtrat und Waschfiltrat) durch Zugabe von 9,3 g Kraftwerksasche (mit einem Gehalt an freiem CaO von 0,95 %) und anschließend 5,3 g NH₃ auf einen pH-Wert von 4,5 eingestellt und der dabei erhaltene Niederschlag durch Filtration abgetrennt.
Der erhaltene Filterkuchen wird mit 100 g Wasser gewaschen. Es werden 83 g Filterkuchen mit einem Feststoffgehalt von 20,5 % erhalten.

Alternativ kann die Neutralisation bis zum pH-Wert von 4,5 nur mittels NH₃ (ohne Verwendung von Kraftwerksasche) vorgenommen werden.

| | Neutralisation mit Asche | Neutralisation ohne Asche |
|---|---|---|
| Menge an Lösung | 1,685 kg | 1,685 kg |
| Zugabe Kraftwerksasche | 9,3 g | - - - |
| Zugabe NH₃ | 5,3 g | 5,4 g |
| Filterkuchen (feucht) | 109 g | 83 g |
| Feststoffgehalt | 24,7 % | 20,5 % |
| Filterkuchen (trocken) | 26,9 g | 17,0 g |
| Filtrierzeit | 190 s | 174 s |
| Waschzeit | 40 s | 90 s |

Es zeigt sich, daß bei Verwendung von Kraftwerksasche als Filterhilfe die Waschzeit trotz der größeren Menge an Filterkuchen deutlich kürzer ist.
Die weitere Umsetzung zu einem Magnetitpigment erfolgt analog zu Beispiel 1.

### Beispiel 8 (Vergleichsbeispiel):

20 kg Dünnsäure werden bei 70 bis 80°C gleichzeitig mit 5,00 kg NH₃ in einen Rührbehälter eingeleitet und bei einem konstanten pH-Wert von 5,0 neutralisiert. Dabei werden 0,38 kg eines Metallhydroxid-haltigen Niederschlags erhalten, welcher durch Filtration abgetrennt wird. Die verbleibende Lösung (54 kg) enthält ca. 36 % (NH₄)₂SO₄, 4,2 % FeSO₄, 0,08 % MnSO₄, 3,3 % MgSO₄ und ca.56 % Wasser.
Diese Lösung wird in einer zweiten Stufe mit ca. 2 m³ Luft oxidiert und während der Oxidation durch weitere Zugabe von 0,51 kg NH₃ auf einem pH-Wert von 7,0 gehalten. Dabei werden nach Filtration 1,14 kg Feststoff(Magnetit) sowie 53,5 kg Ammoniumsulfatlösung mit etwa 40,0 % (NH₄)₂SO₄ erhalten.
Die Charakterisierung nach der im Text beschriebenen Methode ergibt:

| | |
|---|---|
| Aufhellung | L* = 64,5 |
| | a* = 0,0 |
| | b* = -0,4 |
| | |
| Aufhellung (relativ zu Bayferrox 306) | ΔL* = 1,6 |
| | Δa* = -0,1 |
| | Δb* = 0,4 |

Da der aus der hochkonzentrierten Ammoniumsulfat-Lösung erhaltene Magnetit eine zu hohe Aufhellung bzw. zu geringe Farbstärke aufweist, ist er als Pigment nicht geeignet.

## Patentansprüche

1. Verfahren zur Herstellung von Gips sowie eines Eisenoxidschwarz-Pigments aus der bei der Herstellung von Titandioxid nach dem Sulfatverfahren anfallenden Dünnsäure, **dadurch gekennzeichnet, daß** in einer ersten Stufe eine teilweise Neutralisation der Dünnsäure mit einer Calcium-Verbindung unter Ausfällung von Gips erfolgt, anschließend die verbleibende Lösung in einer zweiten Stufe weiter neutralisiert wird unter Ausfällung eines Ti-, Al-, Cr-, V- und gegebenenfalls Fe(III)-haltigen Niederschlags und aus der nach Abtrennung der Feststoffe erhaltenen Eisensulfat(II)-haltigen Lösung in einer dritten Stufe unter Zusatz alkalischer Verbindungen sowie eines Oxidationsmittels ein Eisenoxidschwarz-Pigment hergestellt wird.

2. Verfahren nach Anspruch 1, **dadurch gekennzeichnet, daß** der in der ersten Stufe erhaltene Gips und der in der zweiten Stufe erhaltene Ti-, Al-, Cr-, V- und gegebenenfalls Fe(III)-haltige Niederschlag gemeinsam abgetrennt und verwertet werden.

3. Verfahren nach Anspruch 1, **dadurch gekennzeichnet, daß** der in der ersten Stufe erhaltene Gips separat abgetrennt und der in der zweiten Stufe erhaltende Niederschlag ebenfalls separat abgetrennt wird.

4. Verfahren nach Anspruch 1, **dadurch gekennzeichnet, daß** die teilweise Neutralisation der Dünnsäure in der ersten Stufe durch Zugabe der Calciumverbindung bis zu einem pH-Wert von 1,0 bis 3,0, vorzugsweise bis zu einem pH-Wert von 1,4 bis 2,0, vorgenommen wird.

5. Verfahren nach Anspruch 1, **dadurch gekennzeichnet, daß** in der ersten Stufe als Neutralisationsmittel eine Verbindung aus der Gruppe Calciumcarbonat, Calciumhydrogencarbonat, Calciumoxid und Calciumhydroxid verwendet wird.

6. Verfahren nach Anspruch 1, **dadurch gekennzeichnet, daß** in der ersten Stufe als Neutralisationsmittel eine oder mehrere alkalisch reagierende Verbindungen verwendet werden, die mindestens eine der Verbindungen aus der Gruppe Calciumcarbonat, Calciumhydrogencarbonat, Calciumoxid und Calciumhydroxid enthalten.

7. Verfahren nach Anspruch 1, **dadurch gekennzeichnet, daß** durch Zugabe von metallischem Eisen oder einer metallisches Eisen enthaltenden Substanz entweder vor oder nach der Gipsfällung in der ersten Stufe der Eisengehalt der Lösung erhöht und gegebenenfalls vorhandenes Fe(III)-Sulfat zu Fe(II)-Sulfat reduziert wird.

8. Verfahren nach Anspruch 1, **dadurch gekennzeichnet, daß** die weitere Neutralisation der Lösung in der zweiten Stufe bis zu einem pH-Wert von 3,0 bis 5,0, vorzugsweise bis zu einem pH-Wert von 3,5 bis 4,8, vorgenommen und der so erhaltene Niederschlag von der Flüssigphase abgetrennt wird.

9. Verfahren nach Anspruch 1, **dadurch gekennzeichnet, daß** in der zweiten Stufe als Neutralisationsmittel eine Verbindung verwendet wird, die keine schwerlöslichen Sulfate bildet.

10. Verfahren nach Anspruch 1, **dadurch gekennzeichnet, daß** in der zweiten Stufe als Neutralisationsmittel zwei oder mehrere verschiedene Verbindungen verwendet werden, von denen mindestens eine schwerlösliche Sulfate und mindestens eine lösliche Sulfate bildet.

11. Verfahren nach Anspruch 1, **dadurch gekennzeichnet, daß** in der zweiten Stufe als Neutralisationsmittel eine oder mehrere Verbindungen aus der Gruppe der Alkalioxide, Alkalihydroxide, Alkalicarbonate, Alkalihydrogencarbonate, Erdalkalioxide, Erdalkalihydroxide, Erdalkalicarbonate und Erdalkalihydrogencarbonate verwendet wird.

12. Verfahren nach Anspruch 1, **dadurch gekennzeichnet, daß** in der zweiten Stufe als Neutralisationsmittel gasförmiges oder in Wasser gelöstes NH₃ verwendet wird.

13. Verfahren nach Anspruch 1, **dadurch gekennzeichnet, daß** in der zweiten Stufe als Neutralisationsmittel ganz oder teilweise Kraftwerksasche, Müllverbrennungsasche oder eine andere alkalisch reagierende Asche verwendet wird.

14. Verfahren nach Anspruch 1, **dadurch gekennzeichnet, daß** aus der zweiten Neutralisationsstufe nach dem Abtrennen der Feststoffe gegebenenfalls durch Eindampfen eine Eisensulfat-Konzentration zwischen 150 und 250 g, bevorzugt zwischen 180 und 190 g, FeSO₄ pro Liter eingestellt wird.

15. Verfahren nach Anspruch 1, **dadurch gekennzeichnet, daß** die Eisen(II)sulfat-haltige Lösung unter Zusatz alkalischer Verbindungen, die keine schwerlöslichen Sulfate bilden, und eines Oxidationsmittels zu einem Eisenoxidschwarz-Pigment umgesetzt wird.

16. Verfahren nach Anspruch 1, **dadurch gekennzeichnet, daß** die nach der zweiten Neutralisationsstufe erhaltene Eisen(II)sulfat-haltige Lösung unter Zusatz einer alkalischen Verbindung aus der Gruppe gasförmiges NH₃, in Wasser gelöstes NH₃, NaOH, KOH, MgO, MgCO₃ oder Mg(OH)₂ und unter Einblasen von Sauerstoff oder Sauerstoff-haltigen Gasen, insbesondere Luft, zu einem Eisenoxidschwarz-Pigment umgesetzt wird.

17. Verfahren nach Anspruch 1, **dadurch gekennzeichnet, daß** das Eisenoxidschwarz-Pigment zu einem Braun-Pigment verglüht wird.

## Claims

1. A process for the production of gypsum and also of an iron-oxide pigment from the waste acid accumulating in the course of the production of titanium dioxide in accordance with the sulfate process, **characterised in that** in a first stage a partial neutralisation of the waste acid is effected with a calcium compound subject to precipitation of gypsum, subsequently the remaining solution is neutralised further in a second stage subject to precipitation of a deposit containing Ti, Al, Cr, V and optionally Fe(III) and from the solution containing iron(II) sulfate that is obtained after separation of the solids a black iron-oxide pigment is produced in a third stage by addition of alkaline compounds and also of an oxidising agent.

2. A process according to Claim 1, **characterised in that** the gypsum obtained in the first stage and the deposit containing Ti, Al, Cr, V and optionally Fe(III) obtained in the second stage are separated jointly and utilised.

3. A process according to Claim 1, **characterised in that** the gypsum obtained in the first stage is separated separately and the deposit obtained in the second stage is likewise separated separately.

4. A process according to Claim 1, **characterised in that** the partial neutralisation of the waste acid in the first stage is undertaken by addition of the calcium compound until a pH value from 1.0 to 3.0 is attained, preferably until a pH value from 1.4 to 2.0 is attained.

5. A process according to Claim 1, **characterised in that** in the first stage use is made by way of neutralising agent of a compound from the group comprising calcium carbonate, calcium hydrogencarbonate, calcium oxide and calcium hydroxide.

6. A process according to Claim 1, **characterised in that** in the first stage use is made by way of neutralising agent of one or more alkaline-reacting compounds containing at least one of the compounds from the group comprising calcium carbonate, calcium hydrogencarbonate, calcium oxide and calcium hydroxide.

7. A process according to Claim 1, **characterised in that** by addition of metallic iron or a substance containing metallic iron either prior to or after the precipitation of gypsum in the first stage the iron content of the solution is increased and Fe(III) sulfate which is optionally present is reduced to Fe(II) sulfate.

8. A process according to Claim 1, **characterised in that** further neutralisation of the solution is undertaken in the second stage until a pH value from 3.0 to 5.0 is attained, preferably until a pH value from 3.5 to 4.8 is attained, and the deposit so obtained is separated from the liquid phase.

9. A process according to Claim 1, **characterised in that** in the second stage use is made by way of neutralising agent of a compound that forms no sparingly soluble sulfates.

10. A process according to Claim 1, **characterised in that** in the second stage use is made by way of neutralising agent of two or more different compounds, at least one of which forms sparingly soluble sulfates and at least one of which forms soluble sulfates.

11. A process according to Claim 1, **characterised in that** in the second stage use is made by way of neutralising agent of one or more compounds from the group comprising the alkali oxides, alkali hydroxides, alkali carbonates, alkali hydrogencarbonates, alkaline-earth oxides, alkaline-earth hydroxides, alkaline-earth carbonates and alkaline-earth hydrogencarbonates.

12. A process according to Claim 1, **characterised in that** in the second stage use is made by way of neutralising agent of gaseous NH₃ or NH₃ dissolved in water.

13. A process according to Claim 1, **characterised in that** in the second stage use is made by way of neutralising agent, wholly or partially, of power-station ash, refuse-incineration ash or another alkaline-reacting ash.

14. A process according to Claim 1, **characterised in that** following the second neutralisation stage after the separation of the solids an iron-sulfate concentration between 150 and 250 g, preferably between 180 and 190 g, FeSO₄ per litre is adjusted, optionally by evaporative concentration.

15. A process according to Claim 1, **characterised in that** the solution containing iron(II) sulfate is converted into a black iron-oxide pigment by addition of alkaline compounds that form no sparingly soluble sulfates and by addition of an oxidising agent.

16. A process according to Claim 1, **characterised in that** the solution containing iron(II) sulfate that is obtained after the second neutralisation stage is converted into a black iron-oxide pigment by addition of an alkaline compound from the group comprising gaseous NH₃, NH₃ dissolved in water, NaOH, KOH, MgO, MgCO₃ or Mg(OH)₂ and by blowing in oxygen or gases containing oxygen, in particular air.

17. A process according to Claim 1, **characterised in that** the black iron-oxide pigment is biscuit-fired to yield a brown pigment.

## Revendications

1. Procédé de préparation de gypse, ainsi que d'un pigment noir d'oxyde de fer à partir de l'acide dilué formé lors de la préparation de dioxyde de titane par le procédé au sulfate, **caractérisé en ce que** dans une première étape, on réalise une neutralisation partielle de l'acide dilué avec un composé du calcium avec précipitation du gypse, ensuite la solution restante est à nouveau neutralisée dans une deuxième étape avec précipitation d'un résidu contenant les Ti, Al, Cr, V et éventuellement Fe (III) et à partir de la solution contenant du sulfate de fer (II), obtenue après séparation du solide, on prépare un pigment noir d'oxyde de fer dans une troisième étape, par addition de composés alcalins ainsi que par addition d'un oxydant.

2. Procédé suivant la revendication 1, **caractérisé en ce que** le gypse obtenu dans la première étape et le résidu contenant les Ti, Al, Cr, V et éventuellement Fe (III) obtenu dans le deuxième étape, sont séparés et utilisés conjointement.

3. Procédé suivant la revendication 1, **caractérisé en ce que** le gypse obtenu dans la première étape est isolé séparément et le résidu obtenu dans la deuxième étape est également isolé séparément.

4. Procédé suivant la revendication 1, **caractérisé en ce que** la neutralisation partielle de l'acide dilué dans la première étape par addition d'un composé du calcium est réalisée jusqu'à un pH allant de 1,0 à 3,0, de préférence jusqu'à un pH allant de 1,4 à 2,0.

5. Procédé suivant la revendication 1, **caractérisé en ce que** dans la première étape, on utilise comme agent de neutralisation, un composé parmi le groupe du carbonate de calcium, de l'hydrogénocarbonate de calcium, de l'oxyde de calcium et de l'hydroxyde de calcium.

6. Procédé suivant la revendication 1, **caractérisé en ce que** dans la première étape, on utilise comme agent de neutralisation, un ou plusieurs composés alcalins, qui comprennent au moins l'un des composés du groupe du carbonate de calcium, de l'hydrogénocarbonate de calcium, de l'oxyde de calcium et de l'hydroxyde de calcium.

7. Procédé suivant la revendication 1, **caractérisé en ce que** par addition de fer métallique ou d'une substance contenant du fer métallique, avant ou après la précipitation du gypse dans la première étape, la teneur en fer de la solution est augmentée et le cas échéant, le sulfate de Fe (III) présent est réduit en sulfate de Fe (II).

8. Procédé suivant la revendication 1, **caractérisé en ce que** l'autre neutralisation de la solution dans la deuxième étape est réalisée jusqu'à un pH allant de 3,0 à 5,0, de préférence jusqu'à un pH allant de 3,5 à 4,8, et le résidu ainsi obtenu est séparé de la phase liquide.

9. Procédé suivant la revendication 1, **caractérisé en ce que** dans la deuxième étape, on utilise comme agent de neutralisation, un composé qui ne forme pas de sulfate difficilement soluble.

10. Procédé suivant la revendication 1, **caractérisé en ce que** dans la deuxième étape, on utilise comme agent de neutralisation, deux ou plusieurs composés différents, parmi lesquels il se forme au moins un sulfate difficilement soluble et au moins un sulfate soluble.

11. Procédé suivant la revendication 1, **caractérisé en ce que** dans la deuxième étape, on utilise comme agent de neutralisation, un ou plusieurs composés parmi le groupe des oxydes alcalins, des hydroxydes alcalins, des carbonates alcalins, des hydrogénocarbonates alcalins, des oxydes alcalinoterreux, des hydroxydes alcalinoterreux, des carbonates alcalinoterreux et des hydrogénocarbonates alcalinoterreux.

12. Procédé suivant la revendication 1, **caractérisé en ce que** dans la deuxième étape, on utilise comme agent de neutralisation, du NH₃ gazeux ou dissous dans l'eau.

13. Procédé suivant la revendication 1, **caractérisé en ce que** dans la deuxième étape, on utilise comme agent de neutralisation, complètement ou partiellement, des cendres d'usine génératrice, des cendres d'incinération ménagère ou d'autres cendres alcalines.

14. Procédé suivant la revendication 1, **caractérisé en ce que** de la deuxième étape de neutralisation, après la séparation du solide, le cas échéant par évaporation, on ajuste une concentration en sulfate de fer comprise dans l'intervalle allant de 150 à 250 g et de préférence, de 180 à 190 g de FeSO₄ par litre.

15. Procédé suivant la revendication 1, **caractérisé en ce que** la solution contenant le sulfate de fer (II) est mise à réagir en un pigment noir d'oxyde de fer, par addition de composés alcalins, qui ne forment pas de sulfate difficilement soluble, et d'un oxydant.

16. Procédé suivant la revendication 1, **caractérisé en ce que** la solution contenant le sulfate de fer (II), obtenue après la deuxième neutralisation, est mise à réagir en un pigment noir d'oxyde de fer, par addition d'un composé alcalin parmi le groupe du NH₃ gazeux, du NH₃ dissous dans l'eau, du NaOH, du KOH, du MgO, du MgCO₃ ou du Mg(OH)₂ et par barbotage d'oxygène ou d'un gaz contenant de l'oxygène, en particulier d'air.

17. Procédé suivant la revendication 1, **caractérisé en ce que** le pigment noir d'oxyde de fer est calciné en un pigment brun.
